# EUROPÄISCHE PATENTSCHRIFT

(11) **EP 3 433 124 B1**
(45) Veröffentlichungstag und Bekanntmachung des Hinweises auf die Patenterteilung: **07.04.2021**
(21) Anmeldenummer: 17711572.2
(22) Anmeldetag: 24.02.2017
(51) Int. Cl.: B60L 5/30

(54) **POSITIONIEREINHEIT UND VERFAHREN ZUR KONTAKTIERUNG**
POSITIONING UNIT AND CONTACTING METHOD
UNITÉ DE POSITIONNEMENT ET PROCÉDÉ DE MISE EN CONTACT

(30) Priorität: 24.03.2016 DE 102016205012
(43) Veröffentlichungstag der Anmeldung: 30.01.2019
(73) Patentinhaber: Schunk Transit Systems GmbH, 5151 Nussdorf am Haunsberg (AT)
(72) Erfinder: PACHLER, Alexander, 5020 Salzburg (AT)
(74) Vertreter: advotec.
(86) Internationale Anmeldenummer: PCT/EP2017/054277
(87) Internationale Veröffentlichungsnummer: WO 2017/162398

(56) Entgegenhaltungen:
- WO-A1-2015/022008
- DE-A1-102004 031 572
- DE-C1- 19 540 913
- DE-U1-202014 007 218
- COLLINA A ET AL: "An Application of Active Control to the Collector of an High-Speed Pantograph: Simulation and Laboratory Tests", DECISION AND CONTROL, 2005 AND 2005 EUROPEAN CONTROL CONFERENCE. CDC-E CC '05. 44TH IEEE CONFERENCE ON SEVILLE, SPAIN 12-15 DEC. 2005, PISCATAWAY, NJ, USA,IEEE, 12 December 2005 (2005-12-12), pages 4602-4609, XP010884421, ISBN: 978-0-7803-9567-1

## Beschreibung

Die Erfindung betrifft eine Positioniereinheit sowie ein Verfahren zur Ausbildung einer elektrisch leitenden Verbindung zwischen einer stationären Ladestation und einem Fahrzeug, insbesondere Elektrobus oder dergleichen, wobei mittels der Positioniereinheit ein elektrischer Ladekontakt der Positioniereinheit relativ zu einer Ladekontaktfläche bewegbar und mit dieser kontaktierbar ist, wobei die Positioniereinheit eine Gelenkarmvorrichtung und eine Antriebvorrichtung zum Antrieb der Gelenkarmvorrichtung aufweist, wobei der Ladekontakt mittels der Gelenkarmvorrichtung zwischen einer Kontaktposition zur Stromübertragung und einer Einfahrposition zur Stromunterbrechung positionierbar ist, wobei die Antriebvorrichtung einen Verstellantrieb zur Ausbildung einer auf die Gelenkarmvorrichtung wirkendenden Verstellkraft und eine mit dem Verstellantrieb mechanisch zusammenwirkende Federeinrichtung aufweist, wobei von dem Verstellantrieb eine Kontaktkraft auf die Ladekontaktfläche ausbildbar ist, wobei der Verstellantrieb eine Regeleinrichtung und einen Elektromotor aufweist, der mittels der Regeleinrichtung ansteuerbar ist.

Derartige Positioniereinheiten und Verfahren sind aus dem Stand der Technik bekannt und werden regelmäßig bei elektrisch angetriebenen Fahrzeugen eingesetzt, die zwischen Haltestellen verkehren. Dies können Elektrobusse, aber auch prinzipiell andere Fahrzeuge, wie beispielsweise ein Zug oder eine Straßenbahn, sein, die nicht permanent elektrisch mit einem Fahrdraht oder ähnlichem verbunden sind. Bei diesen Fahrzeugen erfolgt eine Aufladung eines elektrischen Energiespeichers bei Fahrtunterbrechung an einer Haltstelle durch eine Ladestation. Das Fahrzeug wird an der Haltestelle mit der Ladestation elektrisch verbunden, wobei der Energiespeicher zumindest soweit aufgeladen wird, dass das Fahrzeug die nächste anzufahrende Haltestelle mit einer Ladestation erreichen kann. Zur Herstellung einer elektrischen Verbindung zwischen Fahrzeug und Ladestation wird eine Positioniereinheit eingesetzt, die auf einem Fahrzeugdach oder alternativ oberhalb des Fahrzeugs, beispielsweise an einem Mast montiert sein kann. Die Positioniereinheit kann dann einen Ladekontakt mit einer Ladekontaktfläche verbinden, so dass das Fahrzeug beziehungsweise der Energiespeicher an der Haltestelle aufgeladen werden kann.

Wesentlich bei einer Zusammenführung von Ladekontakt und Ladekontaktfläche ist, dass der Ladekontakt mit einer definierten Kontaktkraft auf die Ladekontaktfläche gedrückt wird, um eine sichere elektrische Verbindung ausbilden zu können. Eine Positioniereinheit oberhalb eines Fahrzeugs ist aus der DE 202014007218 U1 bekannt, wobei die Positioniereinheit eine Gelenkarmvorrichtung und eine Antriebvorrichtung umfasst. Die Antriebvorrichtung weist einen Verstellantrieb und eine Federeinrichtung auf, die dazu dienen, die Gelenkarmvorrichtung relativ zu der Ladekontaktfläche des Fahrzeugs zu bewegen. Insbesondere eine Aufwärtsbewegung der Gelenkarmvorrichtung erfordert eine Verstellkraft des Verstellantriebs.

Stets nachteilig bei den bekannten Positioniereinheiten ist, dass diese für eine definierte Kontakthöhe, das heißt einen Abstand der Positioniereinheit in einer Einfahrposition zur Verwahrung des Ladekontakts relativ zu einer Kontaktposition zur Stromübertragung auf das Fahrzeug, ausgebildet beziehungsweise angeordnet sein müssen. Das heißt, dass ein Relativabstand von Kontaktposition und Einfahrposition nicht variabel nutzbar ist und regelmäßig eingestellt oder durch konstruktive Änderung angepasst werden muss, da sonst nicht die notwendige beziehungsweise gewünschte Kontaktkraft auf die Ladekontaktfläche aufgebracht werden kann. Insbesondere wenn Fahrzeugtypen und damit die Höhen der Fahrzeuge wechseln, kann ein Relativabstand von Einfahrposition und Kontaktposition infolge von abweichenden Höhen der Kontaktflächen der Fahrzeuge über einer Fahrbahn stark schwanken. Gleiches gilt für eine unterschiedliche Beladung eines Fahrzeugs oder ein Absenken eines Fahrzeugs beziehungsweise eines Busses im Bereich einer Haltstelle, um einen Zugang für beispielsweise Personen mit einer körperlichen Beeinträchtigung zu erleichtern. Bei dem Absenken des Fahrzeugs bewegt sich dann der Ladekontakt in vertikaler Richtung relativ zur Ladekontaktfläche, wenn die Kontaktkraft nicht weiter aufrechterhalten werden kann. Eine Anpassung einer Kontaktkraft durch den Einsatz von Sensoren an dem Ladekontakt oder der Gelenkarmvorrichtung in Verbindung mit einer Regelung ist hingegen aufwendig und wartungsintensiv, was die Herstellungs- und Betriebskosten einer Positioniereinheit wesentlich erhöhen würde.

Eine mit derartigen Sensoren ausgestattete Positioniereinheit zur Ausbildung einer definierten Kontaktkraft ist aus der DE 4334716 A1 bekannt, wobei diese Positioniereinheit zur Stromabnahme an einer Oberleitung dient und die Kontaktkraft von der Positioniereinheit gemessen und geregelt wird.

Die DE 10 2004 031572 A1 offenbart ein Fahrzeug mit einem Hybridantrieb, der eine Antriebsvorrichtung, insbesondere einen Verbrennungsmotor, und einen Elektromotor aufweist. Dabei hat der Elektromotor die Funktion, ein Abfallen eines Drehmoments an einem Abtriebrad eines Getriebes des Fahrzeuges während eines in einem Zeitintervall stattfindenden Schaltvorgangs zu begrenzen.

Die DE 195 40 913 C1 offenbart einen Stromabnehmer, bei dem eine Kontaktkraft eines Schleifstücks des Stromabnehmers an einem Fahrdraht konstant gehalten werden kann. Dazu umfasst der Stromabnehmer Torsionsaktuatoren, welche von einer Steuerung angesteuert werden können, und einen Kraftsensor, welcher mit der Steuerung in Eingrifft steht. Die Torsionsaktuatoren ihrerseits weisen einen aus einem anisotropen Faserverbundwerkstoff ausgebildeten Rohrabschnitt, welcher mittels Tellerfedern unter einer Druckvorspannung gehalten wird, sowie einen linearen Aktuator auf. Mit einer Betätigung bzw. Ansteuerung des linearen Aktuators geht eine Veränderung der Druckvorspannung und somit eine relative Verdrehung von Enden des Rohrabschnitts einher, was wiederum zu einer Ausbildung von Torsionskräften zwischen einem Fortsatz und einem zweiten Tragarm führt.

Das Dokument COLLINA ET AL: "An Application of Active Control to the Collector of an High-Speed Pantograph: Simulation and Laboratory Tests", DECISION AND CONTROL, 2005 AND 2005 EUROPEAN CONTROL CONFERENCE. CDC-E CC '05. 44 TH IEEE CONFERENCE ON SEVILLE, SPAIN 12-15 DEC. 2005, PISCATAWAY, NJ, USA, IEEE, 12. Dezember 2005 (2005-12-12), Seiten 4602-4609, XP010884421, ISBN: 978-0-7803-9567-1 bezieht sich auf ein Verfahren zur Verminderung einer Variation einer zwischen einer Oberleitung und einem Pantographen eines Hochgeschwindigkeitszuges ausgebildeten Kontaktkraft, wobei die Variation zu Kontaktverlusten sowie einer Lichtbogen- bzw. Funkenbildung und einer damit einhergehenden Reduktion einer Qualität einer Stromübertragung führen kann. Zu diesem Zweck ist der Pantograph mit einem Verstellantrieb ausgestattet, welcher einen Elektromotor und eine Regeleinrichtung umfasst, welche den Elektromotor in einem "torque control mode" ansteuert. Eine Geschwindigkeit des Elektromotors wird über eine Ankerspannung gesteuert, wobei die Ankerspannung als Funktion eines Referenzwertes und eines gemessenen Wertes für die Kontaktkraft bestimmt wird. Mittels dieses Verfahrens kann ein Kontaktverlust zwischen einer Oberleitung und einer insbesondere hinteren Schleifleiste weitgehend reduziert werden. Durch die Verwendung des Verfahrens ist es somit möglich, eine Geschwindigkeit eines Zuges weiter zu erhöhen, ohne Modifikationen an der Oberleitung vornehmen zu müssen.

Es ist daher Aufgabe der Erfindung, nur eine Positioniereinheit und ein Verfahren zur Ausbildung einer elektrisch leitenden Verbindung zwischen einem Fahrzeug und einer Ladestation vorzuschlagen, die beziehungsweise das eine sichere Kontaktierung des Fahrzeugs bei gleichzeitig niedrigen Anschaffungs- und Betriebskosten ermöglicht.

Diese Aufgabe wird durch eine Positioniereinheit mit den Merkmalen des Anspruchs 1 und ein Verfahren mit den Merkmalen des Anspruchs 10 gelöst.

Die erfindungsgemäße Positioniereinheit zur Ausbildung einer elektrisch leitenden Verbindung zwischen einer stationären Ladestation und einem Fahrzeug, insbesondere Elektrobus oder dergleichen, ist so ausgebildet, dass mittels der Positioniereinheit ein elektrischer Ladekontakt der Positioniereinheit relativ zu einer Ladekontaktfläche bewegbar und mit dieser kontaktierbar ist, wobei die Positioniereinheit eine Gelenkarmvorrichtung und eine Antriebvorrichtung zum Antrieb der Gelenkarmvorrichtung aufweist, wobei der Ladekontakt mittels der Gelenkarmvorrichtung zwischen einer Kontaktposition zur Stromübertragung und einer Einfahrposition zur Stromunterbrechung positionierbar ist, wobei die Antriebvorrichtung einen Verstellantrieb zur Ausbildung einer auf die Gelenkarmvorrichtung wirkenden Verstellkraft und eine mit dem Verstellantrieb mechanisch zusammenwirkende Federeinrichtung aufweist, wobei von dem Verstellantrieb eine Kontaktkraft auf die Ladekontaktfläche ausbildbar ist, wobei der Verstellantrieb eine Regeleinrichtung und einen Elektromotor aufweist, der mittels der Regeleinrichtung ansteuerbar ist, wobei der Verstellantrieb so ausgebildet ist, dass ein Drehmoment des Elektromotors von der Regeleinrichtung erfassbar ist, wobei die Kontaktkraft von der Regeleinrichtung in Abhängigkeit des Drehmoments des Elektromotors regelbar ist, wobei in der Kontaktposition während einer Änderung eines Relativabstandes der Ladekontaktfläche bzw. der Kontaktposition zu der Einfahrposition der Positioniereinheit die Kontaktkraft konstant ausbildbar ist.

Die Positioniereinheit kann demnach Bestandteil einer stationären Ladestation für ein elektrisch angetriebenes Fahrzeug oder Bestandteil eines elektrisch angetriebenen Fahrzeugs sein, wobei die Positioniereinheit dazu dient, den Ladekontakt der Ladestation oder des Fahrzeugs auf eine Ladekontaktfläche des Fahrzeugs beziehungsweise der Ladestation zu bewegen und mit dieser elektrisch zu kontaktieren. So ist es dann möglich, das Fahrzeug während einer Fahrtunterbrechung an der Ladestation mit elektrischer Energie zu versorgen und diese im Fahrzeug zu speichern. Die Bewegung des Ladekontakts auf die Ladekontaktfläche hin und zurück wird durch die Gelenkarmvorrichtung und die Antriebvorrichtung der Positioniereinheit ausgeführt. Der Ladekontakt ist dazu an einem Ende der Gelenkarmvorrichtung angeordnet. Die Antriebvorrichtung dient dazu, den Ladekontakt und damit die Gelenkarmvorrichtung von einer Einfahrposition zur Verwahrung des Ladekontakts bis zu einer Kontaktposition zur Stromübertragung beziehungsweise Kontaktierung der Ladekontaktfläche mit dem Ladekontakt zu bewegen. In der Kontaktposition wird dabei eine definierte Kontaktkraft auf die Ladekontaktfläche von der Positioniereinheit ausgebildet. In der Einfahrposition kann hingegen keine oder nur eine sehr geringe Verstellkraft auf die Gelenkarmvorrichtung wirken, so dass keine Bewegung der Gelenkarmvorrichtung beziehungsweise des Ladekontakts erfolgen kann. Die Verstellkraft wird durch den Verstellantrieb der Antriebvorrichtung auf die Gelenkarmvorrichtung bewirkt, wobei der Verstellantrieb mechanisch mit der Federeinrichtung zusammenwirkt. Während einer Bewegung des Ladekontakts ist die Verstellkraft von einer Mechanik der Gelenkarmvorrichtung beziehungsweise einer Übersetzung des Verstellantriebs abhängig und verändert sich kaum. Bei der Kontaktierung des Ladekontakts mit der Ladekontaktfläche wird die Verstellkraft durch den Verstellantrieb erhöht und führt zu einer Ausbildung beziehungsweise Erhöhung der Kontaktkraft auf die Ladekontaktfläche.

Der Verstellantrieb weist darüber hinaus eine Regeleinrichtung auf, die beispielsweise auch eine Regelelektronik für den Elektromotor sein kann. Dabei kann vorgesehen sein, dass die Regelelektronik direkt in dem Elektromotor integriert ist. Die Regeleinrichtung kann einen Drehmoment des Elektromotors über beispielsweise die aufgewendete Energie erfassen und den Elektromotor so regeln, dass die definierte Kontaktkraft von dem Elektromotor über die Gelenkarmvorrichtung und den Ladekontakt auf die Ladekontaktfläche ausgebildet wird. Es ist dann möglich, eine unmittelbare Kraftwirkung auf die Gelenkarmvorrichtung und gegebenenfalls auf den Ladekontakt, optional auch in Abhängigkeit von verschiedenen Einflussfaktoren, aktiv anzupassen. Somit wird es möglich, unabhängig von einem Relativabstand von Ladekontaktfläche und Positioniereinheit beziehungsweise einer Höhe des Fahrzeugs eine stets gleich hohe Kontaktkraft auf die Ladekontaktfläche auszubilden.

Erfindungsgemäß wird in der Kontaktposition während einer Änderung eines Relativabstandes der Ladekontaktfläche beziehungsweise der Kontaktposition zu der Einfahrposition der Positioniereinheit die Kontaktkraft konstant ausgebildet. Eine Änderung eines Relativabstands eines Fahrzeugs zu einer Fahrbahn hat auch stets eine Änderung des Relativabstands der Kontaktposition zu der Einfahrposition zur Folge. Eine Änderung des Relativabstands kann durch eine Absenkung des Fahrzeugs über ein Fahrwerk oder durch eine Beladung des Fahrzeugs hervorgerufen werden. Dadurch, dass die Kontaktkraft relativ zur Verstellkraft vergleichsweise groß ist, kann die Kontaktkraft im Wesentlichen konstant ausgebildet werden, auch wenn der Relativabstand verändert wird. Eine konstante Kontaktkraft kann noch einfacher unabhängig von dem Relativabstand ausgebildet werden, wenn die Kontaktkraft von der Regeleinrichtung in Abhängigkeit des Drehmoments des Elektromotors geregelt wird. Vergrößert sich der Relativabstand durch ein Absenken des Fahrzeugs, so verringert sich die Kontaktkraft, und damit unmittelbar ein Drehmoment des Elektromotors, welches von der Regeleinrichtung dann wieder erhöht wird, woraus sich eine konstante Kontaktkraft ergibt. Umgekehrt führt eine Verkürzung des Relativabstandes zu einer Erhöhung einer Kontaktkraft und damit des Drehmoments, dem die Regeleinrichtung durch eine Verminderung des Drehmoments entgegenwirken kann.

Der Elektromotor kann ein bürstenloser Elektromotor sein. Wenn der Verstellantrieb einen bürstenlosen Elektromotor aufweist, können besonders viele Bewegungszyklen ausgeführt werden. Ein bürstenloser Elektromotor erfordert wesentlich weniger und längere Wartungsinterwalle als ein bürstenbehafteter Elektromotor bei gleichen mechanischen Leistungsdaten. So ist es insgesamt möglich, eine Positioniereinheit auszubilden, deren Wartungsintervalle verlängert sind beziehungsweise deren Lebensdauer verlängert ist. Als bürstenloser Motor beziehungsweise Elektromotor ohne Schleifkontakte zwischen Rotor und Stator kann beispielsweise eine Drehstrom-Asymchronmaschine mit Kurzschlussläufer oder auch eine Synchronmaschine mit elektronischer Drehfelderzeugung beziehungsweise ein bürstenloser Gleichstrommotor eingesetzt werden.

Der Verstellantrieb kann ein Linearantrieb, bevorzugt ein Spindelantrieb, besonders bevorzugt ein selbsthemmungsfreier Spindelantrieb sein. Der Spindelantrieb kann dann eine entsprechende Spindel mit einer Steigung aufweisen, die eine Selbsthemmung des Spindelantriebs verhindern kann. Der Linearantrieb kann eine Bewegung der Gelenkarmvorrichtung von der Einfahrposition in die Kontaktposition und umgekehrt bewirken. Die Spindel kann insbesondere eine Kugelgewindespindel oder eine Trapezgewindespindel sein, die an den Elektromotor gekoppelt sein kann.

Der Verstellantrieb und/oder die Gelenkarmvorrichtung kann einen Wegsensor und/oder einen Positionssensor aufweisen. Durch eine Verwendung des Wegsensors ist es dann möglich, einen Bereich einzustellen, innerhalb dem die Gelenkarmvorrichtung mit Hilfe des Verstellantriebs bewegbar ist. Als Wegsensor kann beispielsweise ein Inkremental- oder Absolutwertgeber verwendet werden. Es ist dann auch möglich, immer eine genaue Arbeitsposition des Verstellantriebs beziehungsweise des Ladekontakts zu bestimmen. Der Verstellantrieb kann auch positionsabhängig betätigbare Endlagenschalter und/oder kraftabhängig betätigbare Druckschalter aufweisen. Darüber hinaus kann auch eine Höhe einer Kontaktkraft dadurch begrenzt werden, dass der Verstellantrieb nur bis hin zu einer bestimmten Endlage ausfahren kann. Weiter können auch ergänzend Druckschalter zur Begrenzung der Kontaktkraft genutzt werden, die allein oder zusammen mit den Endlagenschaltern zur Begrenzung des Stellantriebs dienen können. Ein Druckschalter kann unmittelbar am Ladekontakt oder aber auch an der Gelenkarmvorrichtung beziehungsweise an dem Verstellantrieb angeordnet sein.

Die Federeinrichtung kann zumindest eine Zugfeder oder eine Druckfeder aufweisen, die eine Federkraft auf die Gelenkarmvorrichtung bewirken kann. Vorzugsweise kann eine Zugfeder verwendet werden, da eine Zugfeder besonders einfach an der Gelenkarmvorrichtung angeschlossen werden kann. Auch kann vorgesehen sein, dass die Federeinrichtung eine Mehrzahl von Federn aufweist, und die Federkraft permanent auf die Gelenkarmvorrichtung wirkt. Die Feder kann demnach in jeder Stellung der Gelenkarmvorrichtung vorgespannt sein. Alternativ ist es auch möglich, eine Druckfeder zur Ausbildung der Federkraft zu verwenden. Eine derartige Federeinrichtung ist besonders robust sowie einfach und kostengünstig herstellbar.

Eine Feder der Federeinrichtung kann über eine Hebel eines Getriebes der Federeinrichtung mit der Gelenkarmvorrichtung mechanisch gekoppelt sein, wobei in Abhängigkeit einer Position der Gelenkarmvorrichtung eine wirksame Länge des Hebels veränderbar ausgebildet sein kann. Der Hebel kann folglich unmittelbar an der Gelenkarmvorrichtung befestigt sein, so dass eine Federkraft der Feder direkt auf die Gelenkarmvorrichtung übertragbar ist. Je nach Lage beziehungsweise Richtung der Federkraft der Feder und Anordnungen des Hebels an der Gelenkarmvorrichtung kann die wirksame Länge des Hebels verkürzt werden, wenn ein zwischen der Richtung der Federkraft und der Erstreckung des Hebels ausgebildeter Winkel kleiner oder größer als 90° ist. Eine wirksame Länge des Hebels lässt sich auch dadurch verändern, dass die Feder über ein Rückstellgetriebe, beispielsweise ausgebildet durch eine Kurvenscheibe oder eine Zugstange, mit einem Anschlag an der Gelenkarmvorrichtung befestigt ist. Die Kurvenscheibe bildet dann den Hebel des Rückstellgetriebes aus. Je nach Lage der Kurvenscheibe relativ zur Feder kann die wirksame Länge des Hebels beeinflusst werden. So ist es möglich, unabhängig von einer Position der Gelenkarmvorrichtung stets die gleiche Rückstellkraft auf die Gelenkarmvorrichtung zu bewirken oder in Abhängigkeit einer Position der Gelenkarmvorrichtung die Rückstellkraft nach den jeweiligen Erfordernissen zu erhöhen oder zu vermindern. Die Rückstellkraft kann auch an die Verstellkraft und die Kontaktkraft angepasst werden. Vorteilhaft ist es, wenn die Rückstellkraft so bemessen ist, dass in jeder Position der Gelenkarmvorrichtung bei einem Ausfall des Verstellantriebs, beispielsweise bewirkt durch einen Stromausfall, ein Einfahren des Ladekontakts infolge der Rückstellkraft selbsttätig erfolgt. Die Positioniereinheit kann damit besonders sicher betrieben werden.

In einer vorteilhaften Ausführungsform kann die Positioniereinheit eine Haltevorrichtung zur Befestigung der Positioniereinheit oberhalb eines Fahrzeugs an einem Mast oder einer Unterführung umfassen, wobei die Federeinrichtung zumindest eine Rückstellfeder zur Ausbildung einer Rückstellkraft auf die Gelenkarmvorrichtung umfassen kann, wobei die Rückstellkraft dann größer ist als eine auf die Rückstellfeder entgegengesetzt wirkende Gewichtskraft der Gelenkarmvorrichtung. Der Halterahmen kann beispielsweise Festlager für die Gelenkarmvorrichtung und den Verstellantrieb ausbilden beziehungsweise aufweisen. Insbesondere kann die Rückstellfeder oder der Verstellantrieb unmittelbar an einem Festlager am Halterahmen befestigt sein. Der Halterahmen kann auch besonders einfach an dem Mast oder der Unterführung sowie an einer Überdachung einer Haltestelle, einem Tunnel oder ähnlichen Einrichtungen, die von einem Fahrzeug unterfahren werden können, befestigt werden. Dadurch, dass die Positioniereinheit über einem Fahrzeug angeordnet sein kann, kann der Verstellantrieb als ein Senkantrieb zum Absenken des Kontaktelements ausgebildet sein und mechanisch mit der Federeinrichtung beziehungsweise der Rückstellfeder zusammenwirken. Nach einer Kontaktierung der Ladekontaktfläche mit dem Ladekontakt kann eine Rückführung des Ladekontakts in die Einfahrposition an der Positioniereinheit oberhalb des Fahrzeugs einfach durchgeführt werden, wenn die Federeinrichtung zumindest mit der einen Rückstellfeder die Rückstellkraft auf die Gelenkarmvorrichtung bewirkt. Dadurch, dass die Rückstellkraft dann größer sein kann als eine auf die Rückstellfeder entgegengesetzt wirkende Gewichtskraft der Gelenkarmvorrichtung, kann die Gelenkarmvorrichtung von der Kontaktposition in die Einfahrposition bewegt werden, ohne dass der Verstellantrieb aktiv ist beziehungsweise mit Energie versorgt wird. Auch wenn sich der Ladekontakt in der Einfahrposition befindet, wirkt die Rückstellkraft dann der Gewichtskraft entgegen und ist vorzugsweise geringfügig größer als diese, um ein Absinken beziehungsweise Ausfahren des Ladekontakts zu verhindern, wenn die Gelenkarmvorrichtung mit keiner weiteren Kraft beaufschlagt wird.

In einer weiteren vorteilhaften Ausführungsform kann die Positioniereinheit eine Haltvorrichtung zur Befestigung der Positioniereinheit auf dem Dach eines Fahrzeugs umfassen, wobei die Federeinrichtung zumindest eine Hubfeder zur Ausbildung einer Hubkraft auf die Gelenkarmvorrichtung umfassen kann, wobei die Hubkraft dann kleiner sein kann als eine auf die Hubfeder entgegengesetzt wirkende Gewichtskraft der Gelenkarmvorrichtung. Der Halterahmen kann ebenfalls Festlager für die Gelenkarmvorrichtung und die Antriebvorrichtung ausbilden beziehungsweise aufweisen, ist jedoch dann auf dem Dach des Fahrzeugs befestigt.

Der Halterahmen kann über Dämpfer, Füße und/oder Isolatoren auf dem Dach einfach montiert werden. Die Positioniereinheit wird so auch besonders einfach auswechselbar. Wenn die Positioniereinheit auf dem Dach des Fahrzeugs befestigt ist, kann der Verstellantrieb einen Hubantrieb zum Ausfahren des Ladekontakts sein, der mechanisch mit der Federeinrichtung zusammenwirken kann. Auch hier kann eine Kontaktierung der Ladekontaktfläche mit dem Ladekontakt einfach durch ein Ausfahren des Ladekontakts in die Kontaktposition durchgeführt werden, wenn die Federeinrichtung zumindest die Hubfeder zur Ausbildung der Hubkraft umfasst, die zusammen mit der Verstellkraft des Verstellantriebs auf die Gelenkarmvorrichtung wirkt, wobei die Hubkraft kleiner sein kann als eine auf die Hubfeder entgegengesetzt wirkende Gewichtskraft der Gelenkarmvorrichtung. So kann eine Gewichtskraft der Gelenkarmvorrichtung und des an der Gelenkarmvorrichtung angeordneten Ladekontakts bewirken, dass sich die Gelenkarmvorrichtung von der Kontaktposition die Einfahrposition bewegt, ohne dass dies von dem Verstellantrieb initiiert wird. Die der Gewichtskraft entgegenwirkende Hubkraft ist vorzugsweise geringfügig kleiner als diese, um ein Absinken des Ladekontakts bei beispielsweise einem Stromausfall sicherzustellen. Weiter unterstützt die Hubkraft jedoch den Verstellantrieb, wenn dieser die Verstellkraft auf die Gelenkarmvorrichtung bei einem Ausfahren der Gelenkarmvorrichtung bewirkt, so dass nur noch eine kleine Verstellkraft aufgebracht werden muss.

Die Gelenkarmvorrichtung kann als ein Einarmsystem oder als ein Scherensystem, vorzugsweise mit einer Parallelogrammführung, oder als Pantograph ausgebildet sein. So kann das Gelenkarmsystem eine parallele Bewegung des Ladekontakts ausgehend von einer Einfahrposition des Ladekontakts bis hin zu der Kontaktposition an der Ladekontaktfläche ermöglichen. An der Gelenkarmvorrichtung können zusätzlich Dämpferelemente angeordnet sein, die einen ruckfreien Bewegungsablauf sicherstellen.

Bei dem erfindungsgemäßen Verfahren zur Ausbildung einer elektrisch leitenden Verbindung zwischen einer stationären Ladestation an einem Fahrzeug, insbesondere Elektrobus oder dergleichen, wird mittels der Positioniereinheit ein elektrischer Ladekontakt der Positioniereinheit relativ zu einer Ladekontaktfläche bewegt und mit dieser kontaktiert, wobei eine Gelenkarmvorrichtung der Positioniereinheit von einer Antriebvorrichtung der Positioniereinheit angetrieben wird, wobei der Ladekontakt mittels der Gelenkarmvorrichtung zwischen einer Kontaktposition und zur Stromübertragung und einer Einfahrposition zur Stromunterbrechung positioniert wird, wobei mittels eines Feststellantriebs der Antriebsvorrichtung eine Verstellkraft ausgebildet wird, die auf die Gelenkarmvorrichtung wirkt, und wobei eine Federeinrichtung der Antriebvorrichtung mit dem Verstellantrieb mechanisch zusammenwirkt, wobei von dem Verstellantrieb einer Kontaktkraft auf die Ladekontaktfläche ausgebildet wird, wobei ein Elektromotor des Verstellantriebs mittels einer Regeleinrichtung des Verstellantriebs angesteuert wird, wobei ein Drehmoment des Elektromotor von der Regeleinrichtung erfasst wird, wobei die Kontaktkraft von der Regeleinrichtung in Abhängigkeit des Drehmoments des Elektromotors geregelt wird, wobei in der Kontaktposition während einer Änderung eines Relativabstandes der Ladekontaktfläche bzw. der Kontaktposition zu der Einfahrposition der Positioniereinheit die Kontaktkraft konstant ausgebildet wird. Die vorteilhaften Wirkungen des erfindungsgemäßen Verfahren betreffend wird auf die Vorteilsbeschreibung der erfindungsgemäßen Positioniereinheit verwiesen.

Die Kontaktkraft kann unabhängig von einem Relativabstand der Ladekontaktfläche beziehungsweise der Kontaktposition zu der Einfahrposition der Positioniereinheit ausgebildet werden. So wird es möglich, auch Fahrzeuge mit unterschiedlichen Höhen relativ zu einer Fahrbahn mit der Positioniereinheit zu kontaktieren.

Mittels der Regeleinrichtung kann das Drehmoment des Elektromotors in Abhängigkeit einer Stellung der Gelenkarmvorrichtung oder des Verstellantriebs eingestellt werden. Dadurch ist es dann möglich, eine unmittelbare Kraftwirkung auf die Gelenkarmvorrichtung und gegebenenfalls das Kontaktelement an eine jeweilige Stellung der Gelenkarmvorrichtung optimal anzupassen und somit auch die Kraftwirkung auf die Ladekontaktfläche unabhängig von der Stellung der Gelenkarmvorrichtung im Wesentlichen konstant auszubilden. Beispielsweise kann über einen Wegsensor eine Stellung der Gelenkarmvorrichtung detektiert und das Drehmoment von der Regeleinrichtung in Abhängigkeit der Stellung bereits angepasst werden, so dass eine Regelung des Drehmoments zur Einstellung der Kontaktkraft keine großen Drehmomentsprünge mehr erfordert.

Auch kann mittels der Regeleinrichtung bei Überschreiten eines Grenzwertes des Drehmoments ein Erreichen der Kontaktposition detektiert werden. In der Kontaktposition trifft der Ladekontakt auf die Ladekontaktfläche, wodurch sich das Drehmoment des Elektromotors wesentlich erhöht. Diese Erhöhung des Drehmoments kann von der Regeleinrichtung als das Erreichen der Kontaktposition detektiert werden. Beispielsweise kann dann eine eventuell vorhandene Drehzahlregelung des Elektromotors ausgeschaltet werden, da dann nur noch ein Nachregeln des Drehmoments des Elektromotors in der Kontaktposition erforderlich ist. Auch kann in der Kontaktposition dann über die Regeleinrichtung beispielsweise ein Freigabesignal zur Energieübertragung von einer Ladestation abgegeben werden. Weitere Sensoren zur Erfassung der Kontaktposition sind daher nicht erforderlich.

Mittels der Regeleinrichtung kann das Drehmoment des Elektromotors bei Erreichen eines Sollwertes des Drehmoments begrenzt und konstant aufrechterhalten werden. Durch die Begrenzung des Drehmoments wird zunächst verhindert, dass der Elektromotor überlastet wird. Weiter wird es dann auch möglich, die Kontaktkraft konstant auszubilden. Gleiches betrifft eine Ausfahr- und Einfahrgeschwindigkeit des Ladekontaktes, die dann begrenzt gesteigert werden kann.

Mittels der Regeleinrichtung kann der Sollwert des Drehmoments in einem Toleranzbereich von +/- 10% geregelt werden. Dieser Toleranzbereich ist vollkommen ausreichend zur Ausbildung einer im Wesentlichen konstanten Kontaktkraft, so dass auf eine besonders genaue Erfassung des Drehmoments des Elektromotors durch die Regeleinrichtung verzichtet werden kann. Die Regeleinrichtung wird so auch kostengünstiger ausbildbar.

Mittels der Regeleinrichtung kann eine maximale Drehzahl des Elektromotors nach einer Laufzeit des Elektromotors von 0 bis 7 Sekunden, vorzugsweise 1 bis 3 Sekunden, erreicht werden. Dadurch können eine unmittelbare Kraftwirkung sowie Schwingungen des Verstellantriebs und der Gelenkarmvorrichtung vermieden beziehungsweise vermindert werden. Das so geregelte Anlaufen des Elektromotors bewirkt dann ebenfalls eine Verlängerung einer Lebensdauer der Positionierreinheit.

Mittels der Regeleinrichtung kann eine Drehzahl des Elektromotors derart geregelt werden, dass der Ladekontakt zumindest abschnittsweise mit einer konstanten Geschwindigkeit bewegt wird. Beispielsweise kann vorgesehen sein, dass der Ladekontakt ausgehend von der Einfahrposition mit einer zunächst positiven Beschleunigung ausgefahren beziehungsweise mit einer negativen Beschleunigung eingefahren wird, jedoch ein überwiegender Abschnitt einer Strecke einer Bewegung des Ladekontakts in die Kontaktposition mit konstanter Geschwindigkeit erfolgt.

Weitere vorteilhafte Ausführungsformen des Verfahrens ergeben sich aus den auf den Vorrichtungsanspruch 1 rückbezogenen Unteransprüchen.

Nachfolgend werden bevorzugte Ausführungsformen der Erfindung unter Bezugnahme auf die beigefügten Zeichnungen näher erläutert.

Es zeigen:
- **Fig. 1**: eine erste Ausführungsform einer Positioniereinheit in einer Einfahrposition in einer Seitenansicht;
- **Fig. 2**: die Positioniereinheit in einer Kontaktposition in der Seitenansicht;
- **Fig. 3**: eine zweite Ausführungsform einer Positioniereinheit in einer Kontaktposition in einer perspektivischen Ansicht;
- **Fig. 4**: eine Detailansicht aus **Fig. 3**;
- **Fig. 5**: die Positioniereinheit aus **Fig. 3** in einer Einfahrposition in einer perspektivischen Ansicht;
- **Fig. 6**: die Positioniereinheit aus **Fig. 3** in der Kontaktposition in einer perspektivischen Ansicht.

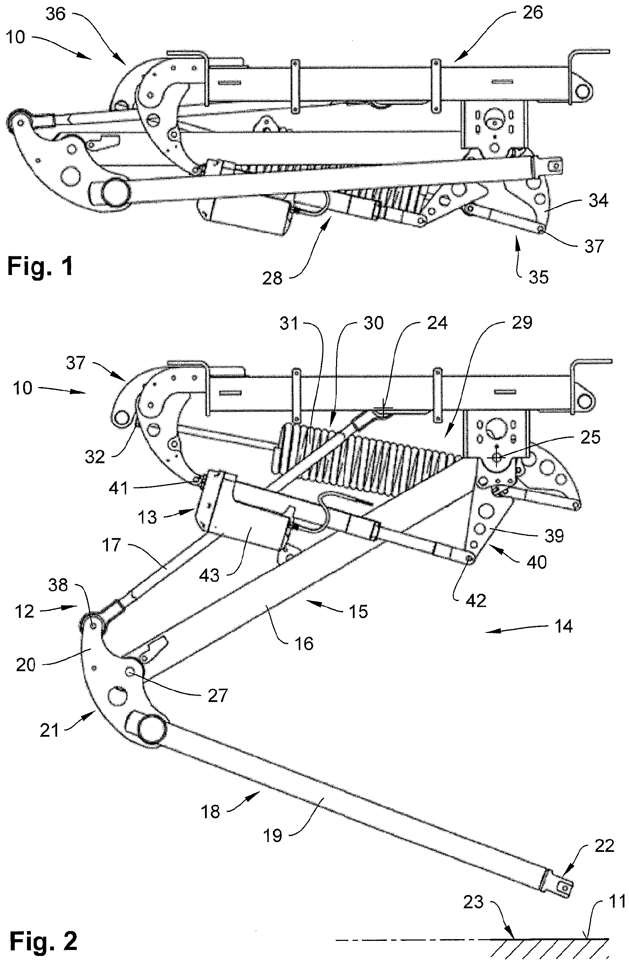

Eine Zusammenschau der **Fig. 1** und **2** zeigt eine erste Ausführungsform einer Positioniereinheit 10 in verschiedenen Positionen. Eine Kontaktierung einer Ladekontaktfläche 11 ist hier lediglich symbolisch veranschaulicht. Die Positioniereinheit 10 umfasst eine Gelenkarmvorrichtung 12 und einen Verstellantrieb 13 zum Antrieb der Gelenkarmvorrichtung 12. Die Gelenkarmvorrichtung 12 ist als ein Einarmsystem 14 ausgebildet und umfasst eine Oberschere 15 mit einem Oberscherenarm 16 und einer oberen Kuppelstange 17 sowie eine Unterschere 18 mit einem Unterscherenarm 19 und einer unteren Kuppelstange 20. An dem Oberscherenarm 16 ist ein oberes Koppelglied 21 schwenkbar befestigt, so dass ein Halter 22 der Positioniereinheit 10 für einen hier nicht dargestellten elektrischen Ladekontakt der Positioniereinheit 10 stets parallel zu einer horizontalen Ebene 23 bewegt werden kann. Zu diesem Zweck ist das obere Koppelglied 21 mit der oberen Kuppelstange 17 über eine Achse 38 verbunden. Der Unterscherenarm 19 und die untere Kuppelstange 20 sind jeweils an Festlagern 24 beziehungsweise 25 eines Halterahmens 26 der Positioniereinheit 10 schwenkbar befestigt. Der Unterscherenarm 19 ist über eine Achse 27 mit dem Oberscherenarm 16 schwenkbar verbunden. Eine Schwenkbewegung des Oberscherenarms 16 führt folglich zu einer parallelen Bewegung des Halters 22 relativ zur horizontalen Ebene 23.

Der Verstellantrieb 13 ist als ein Linearantrieb 28 ausgebildet. Eine Federeinrichtung 29 der Positioniereinheit 10 ist mit einer Rückstellfeder 30, die als eine Zugfeder 31 ausgebildet ist, ausgebildet. Die Zugfeder 31 ist an einem Festlager 32 an dem Halterahmen 26 und an einer Achse 33 eines Hebels 34 befestigt. Der Hebel 34 bildet zusammen mit der Achse 33 und der Zugfeder 31 ein Rückstellgetriebe 35 aus. Je nach Position der Gelenkarmvorrichtung 12 wird der mit dem Unterscherenarm 19 drehfest verbundene Hebel 34 relativ zur Zugfeder 31 verschwenkt, so dase eine wirksame Länge des Hebels 34 verkürzt oder verlängert wird. In einer Einfahrposition 36 und in einer Kontaktposition 37 der Positioniereinheit 10 wirkt die Zugfeder 31 unmittelbar auf die Achse 33. Wird die Gelenkarmvorrichtung 12 noch weiter nach unten ausgefahren, wird eine wirksame Länge des Hebels 34 durch Verschwenken desselben wesentlich verkürzt. So ist es möglich, die Zugfeder 31 beziehungsweise dessen wirksame Rückstellkraft an eine Position der Positioniereinheit 10 anzupassen. Die Gelenkarmvorrichtung 12 weist zusammen mit dem Verstellantrieb 13 eine konstruktionsbedingte Gewichtskraft einschließlich eines hier nicht dargestellten Ladekontaktes auf, die auf den Ladekontakt beziehungsweise den Halter 22 wirkt. Die Zugfeder 31 bewirkt eine Federkraft beziehungsweise eine Rückstellkraft, die die Gewichtskraft überschreitet, so dass unabhängig von einer Position der Positioniereinheit 10 auch bei einem Stromausfall eine Rückholung der Positioniereinheit 10 in die Einfahrposition 36 stets sichergestellt ist.

An der Gelenkarmvorrichtung 12 beziehungsweise dem Unterscherenarm 19 ist ein Hebel 39 fest fixiert, der ein Stellgetriebe 40 für die Gelenkarmvorrichtung 11 ausbildet. An einer Achse 41 des Hebels 39 ist der Linearantrieb 28 schwenkbar befestigt. Der Linearantrieb 28 ist weiter über eine Achse 42 fest mit dem Halterahmen 26 verbunden. Der Linearantrieb 28 wird durch einen Elektromotor 43 angetrieben und ist nicht selbsthemmend ausgebildet. So kann bei beispielsweise einem Stromausfall die Zugfeder 31 die Gelenkarmvorrichtung 12 von der Kontaktposition 37 in die Einfahrposition 36 selbsttätig bewegen, wodurch der Linearantrieb 28 eingefahren wird. Der Linearantrieb 28 dient daher hier auch zur Dämpfung einer Bewegung der Gelenkarmvorrichtung 12. Weiter umfasst der Verstellantrieb eine Regeleinrichtung, die hier nicht näher dargestellt ist, und an die der Elektromotor 43 angeschlossen ist. Mittels der Regeleinrichtung wird ein Drehmoment des Elektromotors 43 erfasst, wobei die Regeleinrichtung das Drehmoment des Elektromotors 43 in Abhängigkeit einer Kontaktkraft, die von dem hier nicht dargestellten Ladekontakt auf die Ladekontaktfläche 11 ausgeübt wird, bewirkt wird. Die Kontaktkraft ist zur Ausbildung eines elektrischen Kontakts ausreichend hoch und kann in der Kontaktposition 37 sowie in jeder anderen beliebigen Kontaktposition im Wesentlichen konstant beziehungsweise in jeweils gleicher Höhe ausgebildet werden, dadurch, dass das Drehmoment des Elektromotors 43 geregelt wird.

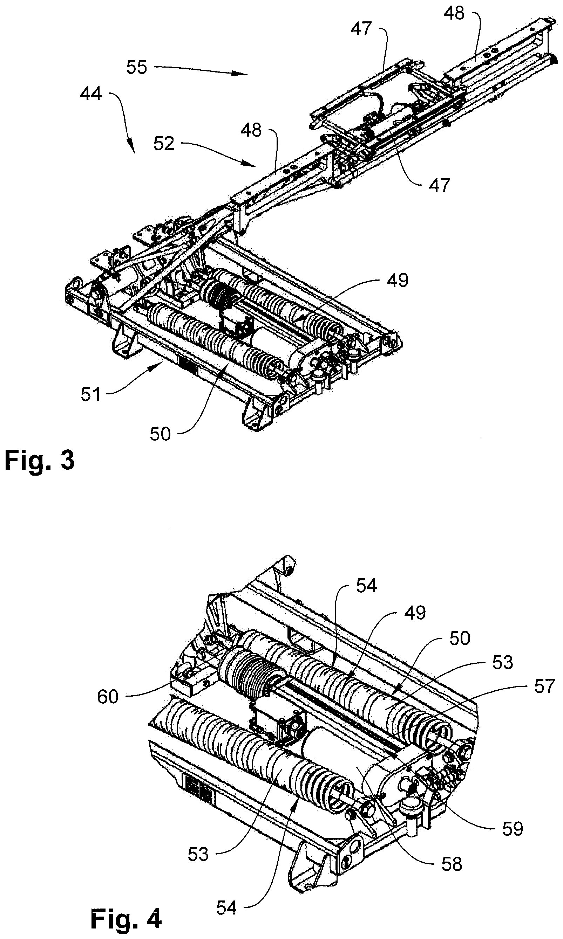

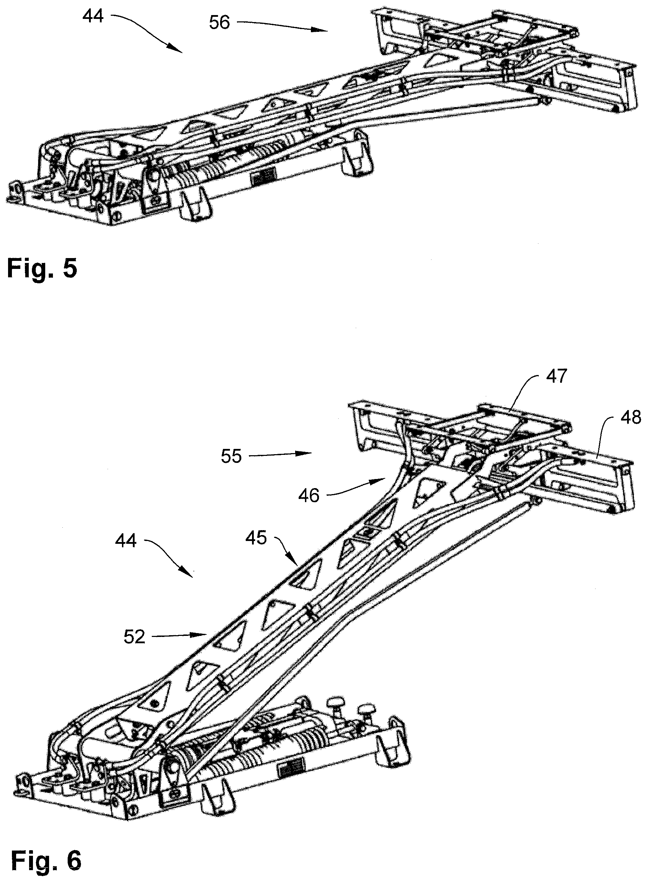

Eine Zusammenschau der **Fig. 3** bis **6** zeigt eine zweite Ausführungsform einer Positioniereinheit 44, die auf einem Dach eines hier nicht dargestellten, elektrisch angetriebenen Fahrzeugs befestigt ist. Die Positioniereinheit 44 umfasst im Wesentlichen eine Gelenkarmvorrichtung 45, an deren Ende 46 Ladekontakte 47 und 48 zur Kontaktierung einer hier nicht näher dargestellten Ladekontaktfläche oberhalb des Fahrzeugs angeordnet sind. Weiter umfasst die Positioniereinheit 44 einen Verstellantrieb 49 und eine Federeinrichtung 50 sowie einen Halterahmen 51. Die Gelenkarmvorrichtung 45 ist als ein Einarmsystem 52 ähnlich dem zuvor beschriebenen Einarmsystem ausgebildet. Die Federeinrichtung 50 umfasst zwei Zugfedern 53, die als Hubfedern 54 ausgebildet sind und eine Hubkraft auf die Gelenkarmvorrichtung 45 bewirken. Die Hubkraft ist dabei so bemessen, dass eine Gewichtskraft der Gelenkarmvorrichtung 45 zusammen mit den Ladekontakten 47 und 48 größer ist als die Hubkraft, so dass bei beispielsweise einem Stromausfall die Gelenkarmvorrichtung 45 stets von einer Kontaktposition 55 in eine Einfahrposition 56 absinkt. Der Verstellantrieb 49 umfasst daher einen nicht selbsthemmenden Linearantrieb 57 mit einem Elektromotor 58 der an eine hier nicht dargestellte Regeleinrichtung angeschlossen ist, und von dieser geregelt wird. Die Regeleinrichtung erfasst ein Drehmoment des Elektromotors 58, wobei die Regeleinrichtung das Drehmoment des Elektromotors 58 so regelt, dass eine definierte Kontaktkraft an den Ladekontakten 47 und 48 ausgebildet wird. Der Linearantrieb 57 umfasst seinerseits eine hier nicht dargestellte Trapezgewindespindel, die hier in einem Gehäuse 59 des Linearantriebs 57 aufgenommen ist und auf eine Antriebsstange 60 über eine Mutter wirkt. Durch eine Bewegung der Antriebsstange 60 kann somit die Gelenkarmvorrichtung in die Kontaktposition 55 beziehungsweise in die Einfahrposition 56 bewegt werden.

## Patentansprüche

1. Positioniereinheit (10, 44) zur Ausbildung einer elektrisch leitenden Verbindung zwischen einer stationären Ladestation und einem Fahrzeug, insbesondere Elektrobus oder dergleichen, wobei mittels der Positioniereinheit ein elektrischer Ladekontakt (47, 48) der Positioniereinheit relativ zu einer Ladekontaktfläche (11) bewegbar und mit dieser kontaktierbar ist, wobei die Positioniereinheit eine Gelenkarmvorrichtung (12, 45) und eine Antriebvorrichtung zum Antrieb der Gelenkarmvorrichtung aufweist, wobei der Ladekontakt mittels der Gelenkarmvorrichtung zwischen einer Kontaktposition (37, 55) zur Stromübertragung und einer Einfahrposition (36, 56) zur Stromunterbrechung positionierbar ist, wobei die Antriebvorrichtung einen Verstellantrieb (13, 49) zur Ausbildung einer auf die Gelenkarmvorrichtung wirkenden Verstellkraft und eine mit dem Verstellantrieb mechanisch zusammenwirkende Federeinrichtung (29, 50) aufweist, wobei von dem Verstellantrieb eine Kontaktkraft auf die Ladekontaktfläche ausbildbar ist, wobei der Verstellantrieb eine Regeleinrichtung und einen Elektromotor (43, 58) aufweist, der mittels der Regeleinrichtung ansteuerbar ist,
**dadurch gekennzeichnet,**
**dass** der Verstellantrieb so ausgebildet ist, dass ein Drehmoment des Elektromotors von der Regeleinrichtung erfassbar ist, wobei die Kontaktkraft von der Regeleinrichtung in Abhängigkeit des Drehmoments des Elektromotors regelbar ist, wobei in der Kontaktposition während einer Änderung eines Relativabstandes der Ladekontaktfläche bzw. der Kontaktposition zu der Einfahrposition der Positioniereinheit die Kontaktkraft konstant ausbildbar ist.

2. Positioniereinheit nach Anspruch 1,
**dadurch gekennzeichnet,**
**dass** der Elektromotor (43, 58) ein bürstenloser Elektromotor ist.

3. Positioniereinheit nach Anspruch 1 oder 2,
**dadurch gekennzeichnet,**
**dass** der Verstellantrieb (13, 49) ein Linearantrieb (28, 57), bevorzugt ein Spindeltrieb, besonders bevorzugt ein selbsthemmungsfreier Spindeltrieb ist.

4. Positioniereinheit nach einem der vorangehenden Ansprüche,
**dadurch gekennzeichnet,**
**dass** der Verstellantrieb (13, 49) und/oder die Gelenkarmvorrichtung (12, 45) einen Wegsensor und/oder einen Positionssensor aufweist.

5. Positioniereinheit nach einem der vorangehenden Ansprüche,
**dadurch gekennzeichnet,**
**dass** die Federeinrichtung (29, 50) zumindest eine Zugfeder (31, 53) oder eine Druckfeder aufweist, die eine Federkraft auf die Gelenkarmvorrichtung bewirkt.

6. Positioniereinheit nach einem der vorangehenden Ansprüche,
**dadurch gekennzeichnet,**
**dass** eine Feder (31, 53) der Federeinrichtung (29, 50) über einen Hebel (34) eines Getriebes (35) der Federeinrichtung mit der Gelenkarmvorrichtung (12, 45) mechanisch gekoppelt ist, wobei in Abhängigkeit einer Position der Gelenkarmvorrichtung eine wirksame Länge des Hebels veränderbar ausgebildet ist.

7. Positioniereinheit nach einem der vorangehenden Ansprüche,
**dadurch gekennzeichnet,**
**dass** die Positioniereinheit (10) eine Haltevorrichtung (26) zur Befestigung der Positioniereinheit oberhalb eines Fahrzeugs an einem Mast oder einer Unterquerung umfasst, wobei die Federeinrichtung (29) zumindest eine Rückstellfeder (30) zur Ausbildung einer Rückstellkraft auf die Gelenkarmvorrichtung (12) umfasst, wobei die Rückstellkraft größer ist als eine auf die Rückstellfeder entgegengesetzt wirkende Gewichtskraft der Gelenkarmvorrichtung.

8. Positioniereinheit nach einem der Ansprüche 1 bis 6,
**dadurch gekennzeichnet,**
**dass** die Positioniereinheit (44) eine Haltevorrichtung (51) zur Befestigung der Positioniereinheit auf dem Dach eines Fahrzeugs umfasst, wobei die Federeinrichtung (50) zumindest eine Hubfeder (54) zur Ausbildung einer Hubkraft auf die Gelenkarmvorrichtung (45) umfasst, wobei die Hubkraft kleiner ist als eine auf die Hubfeder entgegengesetzt wirkende Gewichtskraft der Gelenkarmvorrichtung.

9. Positioniereinheit nach einem der vorangehenden Ansprüche,
**dadurch gekennzeichnet,**
**dass** die Gelenkarmvorrichtung (12, 45) als ein Einarmsystem (14, 52) oder als ein Scherensystem, vorzugsweise mit einer Parallelogrammführung, oder als ein Pantograph ausgebildet ist.

10. Verfahren zur Ausbildung einer elektrisch leitenden Verbindung zwischen einer stationären Ladestation und einem Fahrzeug, insbesondere Elektrobus oder dergleichen, wobei mittels der Positioniereinheit (10, 44) ein elektrischer Ladekontakt (47, 48) der Positioniereinheit relativ zu einer Ladekontaktfläche (11) bewegt und mit dieser kontaktiert wird, wobei eine Gelenkarmvorrichtung (12, 45) der Positioniereinheit von einer Antriebvorrichtung der Positioniereinheit angetrieben wird, wobei der Ladekontakt mittels der Gelenkarmvorrichtung zwischen einer Kontaktposition (37, 55) zur Stromübertragung und einer Einfahrposition (36, 56) zur Stromunterbrechung positioniert wird, wobei mittels eines Verstellantriebs (13, 49) der Antriebvorrichtung eine Verstellkraft ausgebildet wird, die auf die Gelenkarmvorrichtung wirkt, und wobei eine Federeinrichtung (29, 50) der Antriebvorrichtung mit dem Verstellantrieb mechanisch zusammenwirkt, wobei von dem Verstellantrieb eine Kontaktkraft auf die Ladekontaktfläche ausgebildet wird, wobei ein Elektromotor (43, 58) des Verstellantriebs mittels einer Regeleinrichtung des Verstellantriebs angesteuert wird,
**dadurch gekennzeichnet,**
**dass** ein Drehmoment des Elektromotors von der Regeleinrichtung erfasst wird, wobei die Kontaktkraft von der Regeleinrichtung in Abhängigkeit des Drehmoments des Elektromotors geregelt wird, wobei in der Kontaktposition während einer Änderung eines Relativabstandes der Ladekontaktfläche bzw. der Kontaktposition zu der Einfahrposition der Positioniereinheit die Kontaktkraft konstant ausgebildet wird.

11. Verfahren nach Anspruch 10,
**dadurch gekennzeichnet,**
**dass** die Kontaktkraft unabhängig von einem Relativabstand der Ladekontaktfläche (11) bzw. der Kontaktposition (37, 55) zu der Einfahrposition (36, 56) der Positioniereinheit (10, 44) ausgebildet wird.

12. Verfahren nach einem der Ansprüche 10 oder 11,
**dadurch gekennzeichnet,**
**dass** mittels der Regeleinrichtung das Drehmoment des Elektromotors (43, 58) in Abhängigkeit einer Stellung der Gelenkarmvorrichtung (12, 45) oder des Verstellantriebs (13, 49) eingestellt wird.

13. Verfahren nach einem der Ansprüche 10 bis 12,
**dadurch gekennzeichnet,**
**dass** mittels der Regeleinrichtung bei Überschreiten eines Grenzwertes des Drehmoments ein Erreichen der Kontaktposition (37, 55) detektiert wird.

14. Verfahren nach einem der Ansprüche 10 bis 13,
**dadurch gekennzeichnet,**
**dass** mittels der Regeleinrichtung das Drehmoment des Elektromotors (43, 58) bei Erreichen eines Sollwertes des Drehmoments begrenzt und konstant aufrechterhalten wird.

15. Verfahren nach Anspruch 14,
**dadurch gekennzeichnet,**
**dass** mittels der Regeleinrichtung der Sollwert des Drehmoments in einem Toleranzbereich von +/- 10% geregelt wird.

16. Verfahren nach einem der Ansprüche 10 bis 15,
**dadurch gekennzeichnet,**
**dass** mittels der Regeleinrichtung eine maximale Drehzahl des Elektromotors (43, 58) nach einer Laufzeit des Elektromotors von 0 bis 7 Sekunden, vorzugsweise 1 bis 3 Sekunden, erreicht wird.

17. Verfahren nach einem der Ansprüche 10 bis 16,
**dadurch gekennzeichnet,**
**dass** mittels der Regeleinrichtung eine Drehzahl des Elektromotors (43, 58) derart geregelt wird, dass der Ladekontakt (47, 48) zumindest abschnittsweise mit einer konstanten Geschwindigkeit bewegt wird.

## Claims

1. A positioning unit (10, 44) for forming of an electrically conductive connection between a stationary charging station and a vehicle, in particular an electric bus or similar, wherein an electrical charging contact (47, 48) of the positioning unit can be moved relative to a charging contact surface (11) and contacted with same by means of the positioning unit, wherein the positioning unit has an articulated arm device (12, 45) and a drive device for driving the articulated arm device, wherein the charging contact can be positioned between a contact position (37, 55) for power transmission and a retracted position (36, 56) for power interruption by means of the articulated arm device, wherein the drive device has an adjustment drive (13, 49) for forming an adjustment force acting on the articulated arm device and a spring device (29, 50) mechanically cooperating with the adjustment drive, wherein a contact force acting on the charging contact surface can be formed by the adjustment drive, wherein the adjustment drive has a control device and an electric motor (43, 58), which can be actuated by the control device,
**characterized in that**
the adjustment drive is designed in such a way that a torque of the electric motor can be detected by the control device, wherein the contact force can be controlled by the control device as a function of the torque of the electric motor, wherein, in the contact position, during an adjustment of a relative distance of the charging contact surface or of the contact position from the retracted position of the positioning unit, the contact force can be constant.

2. The positioning unit according to claim 1,
**characterized in that**
the electric motor (43, 58) is a brushless electric motor.

3. The positioning unit according to claim 1 or 2,
**characterized in that**
the adjustment drive (13, 49) is a linear drive (28, 57), preferably a spindle drive, particularly preferably a spindle drive without self-locking.

4. The positioning unit according to any one of the preceding claims,
**characterized in that**
the adjustment drive (13, 49) and/or the articulated arm device (12, 45) has a displacement sensor and/or a position sensor.

5. The positioning unit according to any one of the preceding claims,
**characterized in that**
the spring device (29, 50) has at least one tension spring (31, 53) or a compression spring that generates a spring force acting on the articulated arm device.

6. The positioning unit according to any one of the preceding claims,
**characterized in that**
a spring (31, 53) of the spring device (29, 50) is mechanically coupled with the articulated arm device (12, 45) by means of a lever (34) of a transmission (35) of the spring device, wherein, as a function of a position of the articulated arm device, an effective length of the lever is designed in an alterable way.

7. The positioning unit according to any one of the preceding claims,
**characterized in that**
the positioning unit (10) comprises a holding device (26) for fastening the positioning unit above a vehicle on a pole or an underpass, wherein the spring device (29) has at least one restoring spring (30) for forming a restoring force acting on the articulated arm device (12), wherein the restoring force is greater than a gravitational force of the articulated arm device acting on the restoring spring in the opposite direction.

8. The positioning unit according to any one of claims 1 to 6,
**characterized in that**
the positioning unit (44) comprises a holding device (51) for fastening the positioning unit on the roof of a vehicle, wherein the spring device (50) comprises at least one lifting spring (54) for forming a lifting force acting on the articulated arm device (45), wherein the lifting force is smaller than a gravitational force of the articulated arm device acting on the lifting spring in the opposite direction.

9. The positioning unit according to any one of the preceding claims,
**characterized in that**
the articulated arm device (12, 45) is designed as a single-arm system (14, 52) or as a scissors mechanism, preferably with a parallelogram linkage, or as a pantograph.

10. A method for forming an electrically conductive connection between a stationary charging station and a vehicle, in particular an electric bus or similar, wherein an electrical charging contact (47, 48) of the positioning unit is moved relative to a charging contact surface (11) and contacted with same by means of the positioning unit (10, 44), wherein an articulated arm device (12, 45) of the positioning unit is driven by a drive device of the positioning unit, wherein the charging contact is positioned between a contact position (37, 55) for power transmission and a retracted position (36, 56) for power interruption by means of the articulated arm device, wherein an adjustment force acting on the articulated arm device is formed by means of an adjustment drive (13, 49) of the drive device and wherein a spring device (29, 50) of the drive device is mechanically cooperating with the adjustment drive, wherein a contact force acting on the charging contact surface is formed by the adjustment drive, wherein an electric motor (43, 58) of the adjustment drive is actuated by a control device of the adjustment drive,
**characterized in that**
a torque of the electric motor is detected by the control device, wherein the contact force is controlled by the control device as a function of the torque of the electric motor wherein, in the contact position, during an adjustment of a relative distance of the charging contact surface or of the contact position from the retracted position of the positioning unit, the contact force is constant.

11. The method according to claim 10,
**characterized in that**
the contact force is formed independently of a relative distance of the charging contact surface (11) or of the contact position (37, 55) from the retracted position (36, 56) of the positioning unit (10, 44).

12. The method according to claim 10 or 11
**characterized in that**
the torque of the electric motor (43, 58) is set as a function of a position of the articulated arm device (12, 45) or the adjustment drive (13, 49) by means of the control device.

13. The method according to any one of claims 10 to 12,
**characterized in that**
when a set limit of the torque is exceeded, an achievement of the contact position (37, 55) is detected by means of the control device.

14. The method according to any one of claims 10 to 13,
**characterized in that**
the torque of the electric motor (43, 58) is limited and constantly maintained by means of the control device upon achieving a target value of the torque.

15. The method according to claim 14,
**characterized in that**
the target value of the torque is controlled within a tolerance range of +/- 10 % by means of the control device.

16. The method according to any one of claims 10 to 15,
**characterized in that**
a maximum speed of the electric motor (43, 58) is reached within a period of 0 to 7 seconds of the electric motor running, preferably within 1 to 3 seconds, by means of the control device.

17. The method according to any one of claims 10 to 16,
**characterized in that**
a speed of the electric motor (43, 58) is controlled in such a way that the charging contact (47, 48) is moved at a constant velocity at least in sections by means of the control device.

## Revendications

1. Unité de positionnement (10, 44) pour former une connexion électriquement conductrice entre une station de recharge fixe et un véhicule, notamment un bus électrique ou d'autres véhicules semblables, un contact de recharge (47, 48) électrique de l'unité de positionnement pouvant être déplacé par rapport à une surface de contact de recharge (11) et pouvant venir en contact avec ladite surface de contact de recharge au moyen de l'unité de positionnement, l'unité de positionnement ayant un dispositif de bras articulé (12, 45) et un dispositif d'entraînement pour entraîner le dispositif de bras articulé, le contact de recharge pouvant être positionné entre une position de contact (37, 55) pour la transmission de courant et une position de retirée (36, 56) pour la coupure de courant au moyen du dispositif de bras articulé, le dispositif d'entraînement ayant un entraînement de réglage (13, 49) pour former une force de réglage agissant sur le dispositif de bras articulé et un moyen de ressort (29, 50) coopérant mécaniquement avec l'entraînement de réglage, une force de contact agissant sur la surface de contact de recharge pouvant être formée par l'entraînement de réglage, l'entraînement de réglage ayant un moyen de commande et un moteur électrique (43, 58) qui peut être actionné moyennant le moyen de commande
**caractérisée en ce que**
l'entraînement de réglage est réalisé de manière qu'un couple du moteur électrique peut être détecté par le moyen de commande, la force de contact pouvant être commandée par le moyen de commande en fonction du couple du moteur électrique, la force de contact pouvant être constante dans la position de contact lorsqu'une distance relative de la surface de contact de recharge ou de la position de contact à la position de retirée de l'unité de positionnement est modifiée.

2. Unité de positionnement selon la revendication 1,
**caractérisée en ce que**
le moteur électrique (43, 58) est un moteur électrique sans balais.

3. Unité de positionnement selon la revendication 1 ou 2,
**caractérisée en ce que**
l'entraînement de réglage (13, 49) est un entraînement linéaire (28, 57), de préférence un entraînement à broche, de préférence particulière un entraînement à broche sans autoblacage.

4. Unité de positionnement selon l'une quelconque des revendications précédentes,
**caractérisée en ce que**
l'entraînement de réglage (13, 49) et/ou le dispositif de bras articulé (12, 45) a un capteur de déplacement et/ou un capteur de position.

5. Unité de positionnement selon l'une quelconque des revendications précédentes,
**caractérisée en ce que**
le moyen de ressort (29, 50) a au moins un ressort de traction (31, 53) ou un ressort de compression qui génère une force de ressort agissant sur le dispositif de bras articulé.

6. Unité de positionnement selon l'une quelconque des revendications précédentes,
**caractérisée en ce**
**qu'**un ressort (31, 53) du moyen de ressort (29, 50) est couplé mécaniquement au dispositif de bras articulé (12, 45) via un levier (34) d'une transmission (35) du moyen de ressort, une longueur effective du levier étant réalisée de manière modifiable en fonction d'une position du dispositif de bras articulé.

7. Unité de positionnement selon l'une quelconque des revendications précédentes,
**caractérisée en ce que**
l'unité de positionnement (10) comprend un dispositif de retenue (26) pour fixer l'unité de positionnement au-dessus d'un véhicule sur un poteau ou un passage souterrain, le moyen de ressort (29) comprenant au moins un ressort de rappel (30) pour former une force de rappel agissant sur le dispositif de bras articulé (12), la force de rappel étant supérieure à un poids du dispositif de bras articulé agissant sur le ressort de rappel dans la direction opposée.

8. Unité de positionnement selon l'une quelconque des revendications 1 à 6,
**caractérisée en ce que**
l'unité de positionnement (44) comprend un dispositif de retenue (51) pour fixer l'unité de positionnement sur le toit d'un véhicule, le moyen de ressort (50) comprenant au moins un ressort de levage (54) pour former une force de levage agissant sur le dispositif de bras articulé (45), la force de levage étant inférieure à un poids du dispositif de bras articulé agissant sur le ressort de levage dans la direction opposée.

9. Unité de positionnement selon l'une quelconque des revendications précédentes,
**caractérisée en ce que**
le dispositif de bras articulé (12, 45) est réalisé comme système à bras unique (14, 52) ou comme système à ciseaux, de préférence ayant un mécanisme à parallélogramme, ou comme pantographe.

10. Procédé pour former une connexion électriquement conductrice entre une station de recharge fixe et un véhicule, notamment un bus électrique ou d'autres véhicules semblables, un contact de recharge (47, 48) électrique de l'unité de positionnement étant déplacé par rapport à une surface de contact de recharge (11) et venant en contact avec ladite surface de contact de recharge au moyen de l'unité de positionnement (10, 44), un dispositif de bras articulé (12, 45) de l'unité de positionnement étant entraîné par un dispositif d'entraînement de l'unité de positionnement, le contact de recharge étant positionné entre une position de contact (37, 55) pour la transmission de courant et une position de retirée (36, 56) pour la coupure de courant au moyen du dispositif de bras articulé, une force de réglage agissant sur le dispositif de bras articulé étant formée au moyen d'un entraînement de réglage (13, 49) du dispositif d'entraînement, et un moyen de ressort (29, 50) du dispositif d'entraînement coopérant mécaniquement avec l'entraînement de réglage, une force de contact agissant sur la surface de contact de recharge étant formée par l'entraînement de réglage, un moteur électrique (43, 58) de l'entraînement de réglage étant actionné moyennant un moyen de commande de l'entraînement de réglage,
**caractérisé en ce**
**qu'**un couple du moteur électrique est détecté par le moyen de commande, la force de contact étant commandée par le moyen de commande en fonction du couple du moteur électrique, la force de contact étant constante dans la position de contact lorsqu'une distance relative de la surface de contact de recharge ou de la position de contact à la position de retirée de l'unité de positionnement est modifiée.

11. Procédé selon la revendication 10,
**caractérisé en ce que**
la force de contact est formée indépendamment d'une distance relative de la surface de contact de recharge (11) ou de la position de contact (37, 55) à la position de retirée (36, 56) de l'unité de positionnement (10, 44).

12. Procédé selon la revendication 10 ou 11,
**caractérisé en ce que**
le couple du moteur électrique (43, 58) est ajusté en fonction d'une position du dispositif de bras articulé (12, 45) ou de l'entraînement de réglage (13, 49) moyennant le moyen de commande.

13. Procédé selon l'une quelconque des revendications 10 à 12,
**caractérisé en ce que**
le moyen de commande détecte que la position de contact (37, 55) est atteinte lorsqu'une valeur de limite du couple est dépassée.

14. Procédé selon l'une quelconque des revendications 10 à 13,
**caractérisé en ce que**
le couple du moteur électrique (43, 58) est limité et constamment maintenu moyennant le moyen de commande lorsqu'une valeur de consigne du couple est atteinte.

15. Procédé selon la revendication 14,
**caractérisé en ce que**
la valeur de consigne du couple est commandée dans une plage de tolérance de +/- 10 % moyennant le moyen de commande.

16. Procédé selon l'une quelconque des revendications 10 à 15,
**caractérisé en ce**
**qu'**une vitesse de rotation maximale du moteur électrique (43, 58) est atteinte après une durée de marche du moteur électrique de 0 à 7 secondes, de préférence de 1 à 3 secondes, moyennant le moyen de commande.

17. Procédé selon l'une quelconque des revendications 10 à 16,
**caractérisé en ce**
**qu'**une vitesse de rotation du moteur électrique (43, 58) est commandée moyennant le moyen de commande de manière que le contact de recharge (47, 48) est déplacé, au moins par sections, à une vitesse constante.
